# EUROPEAN PATENT APPLICATION

(11) **EP 0 759 680 A1**
(43) Date of publication of application: **26.02.1997**
(21) Application number: 95305828.6
(22) Date of filing: 21.08.1995
(51) Int. Cl.: H04Q 7/32, H04B 1/16, H04M 1/60, H04B 1/38

(54) **A mobile phone peripheral equipment control circuit**

(71) Applicant: E LEAD ELECTRONIC CO., LTD., Changhua City (TW)
(72) Inventor: Chen, Tonny, Changhua City (TW)
(74) Representative: Shackleton, Nicola

(57) **Abstract**

A mobile phone peripheral equipment control circuit for identifying electric wave time. The control circuit is able to judge whether the mobile phone is in use and is applied to the current digital mobile phone system without mis-operation so as to improve or expand the functions of the peripheral equipment. The control circuit includes a wave detector, a signal amplifier, a high-low level time identifier ( usually employing a microcontroller and a program for analyzing the high-low level time ), a peripheral equipment on/off controller and a peripheral equipment. The wave detector detects the signal received by an antenna and the signal amplifier amplifies the signal. The high-low level time identifier identifies whether the signal meets the wave time of the call-in signal of the mobile phone. If so, the peripheral equipment on/off controller is activated to achieve the desired function. The control circuit provides a digital control for the peripheral equipment so that the mis-operation is reduced.

## Description

### BACKGROUND OF THE INVENTION

The present invention relates to a mobile phone peripheral equipment control circuit for identifying electric wave time, and more particularly to a control circuit which is able to judge whether the mobile phone is in use and is applied to the automatic sensing circuit of the amplifier of the hold-free hand set and the call-in current sensing circuit of wireless communicator without mis-operation.

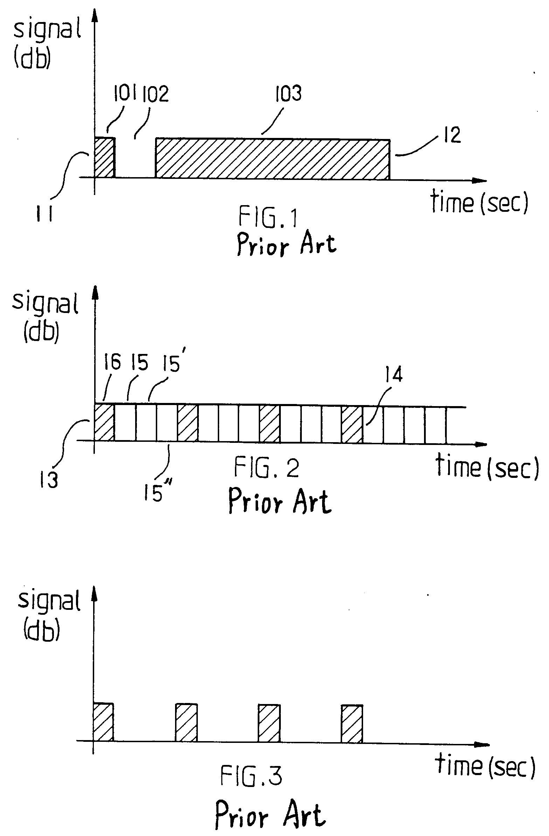

A wireless communicator ( such as a mobile phone ) is widely used nowadays. Although the mobile phone provides more efficient communication for people, some shortcomings still exist in the conventional mobile phone. For example, when used in a car, it is apt to cause danger for a driver to drive with his/her one hand holding the mobile phone. Therefore, a hold-free hand set is developed to solve this problem. However, when a mobile phone in a standby state is connected, the user still needs to depress the power key of the hold-free hand set. This will cause an extent of inconvenience and danger as well. In addition, the sound amplifying circuit and the speaker of the hold-free hand set often create a considerably loud noise which intervenes in the communication. Moreover, the ringing sound of the mobile phone often interrupts a meeting, a movie, a concert, etc. and embarrasses the user. Still more, for a worker carrying a mobile phone in a construction site, the mobile phone always becomes a burden and affects the working. Therefore, it is necessary to provide a control circuit which is able to detect the electric wave of the mobile phone and identify whether the mobile phone is in use or detect a call-in signal to automatically turn on the hold-free hand set or inform the user of the call-in by vibration or louder ringing sound. This will facilitate the use of the mobile phone. Moreover, the conventional analog mobile phone has been improved to a digital time-division multiplex mobile phone, such as GSM system. Therefore, the present invention provides an improved mobile phone peripheral equipment control circuit which is applicable to both analog and digital wireless communicator. The present invention adopts the principle that the pick-up substation receives the signal transmitted from the base station and identifies the transmission time of the electric wave, whereby when the mobile phone is not used and in a standby state ( receiving state ), in case the base station calls the substation, that is, the base station transmits a signal to the substation, requiring communication, once the substation receives the signal, the substation transmits a signal to intercommunicate with the base station. The control circuit of the mobile phone peripheral equipment employs the communication signal of the pick-up substation as the activating signal for the operation. U.S. Patent No. 5,404,391 discloses a conventional circuit which detects the response signal of the substation. It can be seen from Fig. 1 that the transmitted signal of the analog cellular telephone starts at point 11 and ends at point 12. The signal is an acknowledge signal 101 and continues full-dulex voice transmix signal 103. The above Patent utilizes an RC BAND-PASS FILTER & AMP/DC-CONVERTER as the prefix circuit, so that when the acknowledge signal appears, the signal is faster and AMP/DC-CONVERTER reacts slower. Therefore, the output voltage is on low level and the compared voltage of the comparator cannot reach the operation level. However, the subsequent continues full-dulex voice transmix signal 103 of the cellular telephone can be still detected by the circuit. In case there is strong interference resource nearby the circuit, making the output voltage always on the high level, the circuit may mis-identify the signal and cause mis-operation. When applied to a new digital wireless mobile phone, the above circuit will provide a pretty poor sensing effect. This can be seen from Figs. 2 and 3. In Figs. 2 and 3, point 13 the starting point of the substation using the transmitted signal while point 14 is the ending point, wherein the signal using time is only the inclined portion 16 and the blank portions such as 15, 15' and 15'' are empty and used by other terminals. Therefore, the signal strength is as shown in Fig. 3 in which the signal is discontinuous and the strength thereof is pulse wave-like. After the above circuit AMP/DC converts the signal, the left signal strength is only one fourth of the original strength. Therefore, the above circuit can hardly detect the signal.

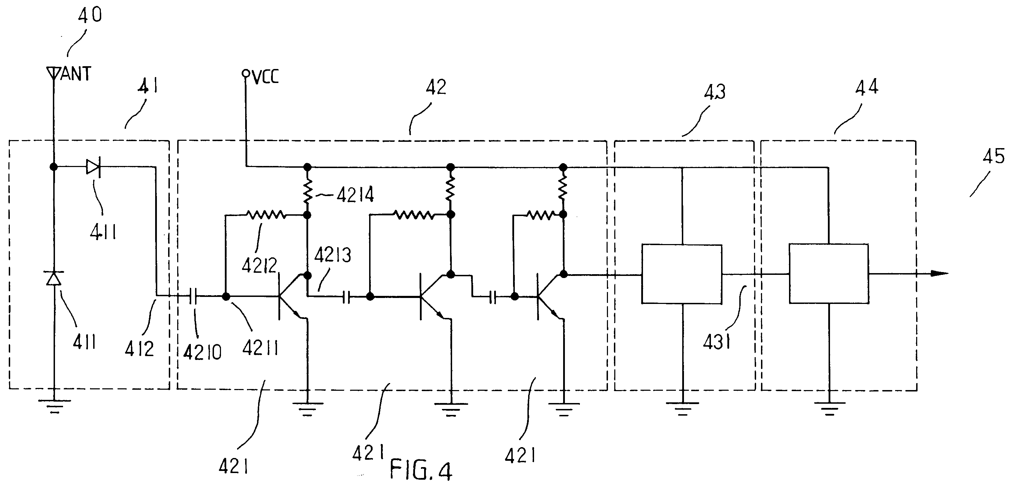

In order to improve the above circuit, the present invention includes a high-low level time identifier which can be a microcontroller such as the current 8051, 6814, PIC, Z8, etc. for identifying the corrent signal by means of the time analysis measure so as not to be interfered with by other noise. In addition, the time analysis can analyze the signal of the digital mobile phone and the signal of the analog mobile phone. In the digital signal analysis, as shown in Fig. 1, the first signal strength pulse wave 101 is compared. This pulse wave is the signal of the substation in response to the call in of the base station or requiring call-out. Then the next signal blank section 102 is compared to see whether the length or range of the two sections are in conformity with each other. If so, it is seen whether the intercommunication signal 103 is maintained for a period of time. If the above conditions all stand, it can be judged that the signal of the mobile phone is correct and the peripheral equipment is activated. The present invention can even identify the call-in or call-out signal according to the signal strength pulse wave 101 and the length of the signal blank section 102. With respect to the identification for the digital mobile phone, the signal transmission section 16 and the signal blank section 17 of Fig. 3 are compared to see whether the length or range thereof is in comformity. Such comparison is repeated several times before the correct signal is identified and then the peripheral equipment is activated. As shown in Fig. 4, the present invention has a preceding wave detecting circuit employing a simple diode wave detector 41 and a succeeding third transistor signal amplifier 42. These two circuits have simple structure and less noise than the general wave detecting circuit and calculation amplifier circuit. In addition, the cost for these two circuits is less.

### SUMMARY OF THE INVENTION

Therefore, a primary advantage of the present invention is the provision of a mobile phone peripheral equipment control circuit for identifying electric wave time. The control circuit is able to judge whether the mobile phone is in use and is applied to both the digital mobile phone and analog mobile phone with reduced possibility of mis-operation. The control circuit of the present invention can even identify the call-in or call-out signal.

The present invention can be best understood through the following description and accompanying drawings, wherein:

### BRIEF DESCRIPTION OF THE DRAWINGS

Fig. 1 is a diagram showing the signal strength of the analog wireless communicator;
Fig. 2 is a diagram showing the distribution of the signal of the digital time-division multiplex wireless communicator;
Fig. 3 is a diagram showing the signal strength of the digital time-division multiplex wireless communicator;
Fig. 4 is a circuit diagram of a preferred embodiment of the present invention;
Fig. 5 is a block diagram of the control unit of the present invention;
Fig. 6 is a flow chart of the control program of the microcontroller with respect to the analog mobile phone signal;
Fig. 7 is a diagram showing the variable of the control program of the microcontroller with respect to the analog mobile phone signal;
Fig. 8 is a flow chart of the control program of the microcontroller with respect to the digital mobile phone signal; and
Fig. 9 is a diagram showing the variable of the control program of the microcontroller with respect to the digital mobile phone signal.

### DETAILED DESCRIPTION OF THE PREFERRED EMBODIMENT

Please refer to Fig. 4. According to a preferred embodiment, the present invention mainly includes:
a diode wave detector consisting of two wave detecting diodes 411 which detect the electric wave received by an antenna 40 and output the signal 412;
a signal amplifier 42 including a third transistor amplifier, the input signal 412 being coupled by a capacitor 4210 into a signal 4211, an amplifier 421 consisting of a resistor 4214, resistor 4212 and transistor 4215 amplifying the signal 4211, the output signal 4215 being coupled by a secondary amplifier 412 to output a signal 424; and
a high-low level time identifier 43 employing a microcontroller to identify the wave form via a program and output a signal 431 for controlling a peripheral equipment on/off controller 44 which drives the peripheral equipment 45 according to the signal of the microcontroller 43.

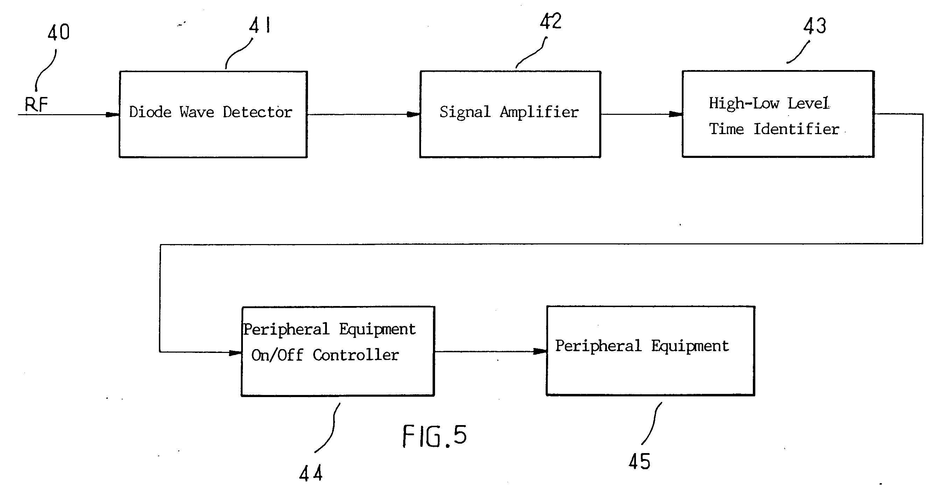

Fig. 5 is a block diagram of the control of the above circuit.

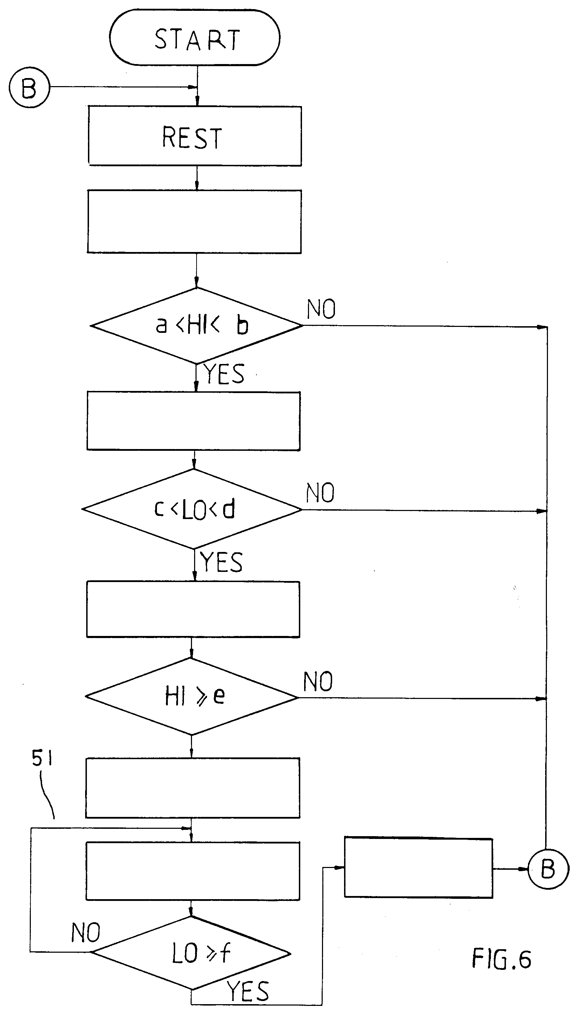

Referring to Fig. 6 which is a flow chart of the control of the microcontroller 43 with respect to analog mobile phone signal, the microcontroller resets the system after powered on to read the width of the high level ( HI ) and judge whether the width is between a and b. If not, the flow goes back to point B to read the width of the low level ( LO ) and judge whether the width is between c and d. If not, the flow goes back to point B to read the width of the high level and judge whether the width is larger than/equal to e. If not, the flow goes back to point B and then activates the output to read the width of the low level and judge whether the width is larger than/equal to f. If not, the flow goes back to the preceding step 51 to close the output and go back to point B.

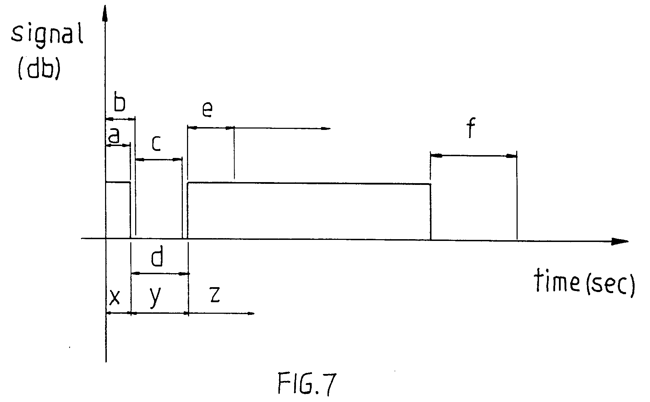

Please refer to Fig. 7. a is the minimum width time of the response of the substation to the call signal of the base station. b is the maximum width time of the response of the substation to the call signal of the base station. c is the minimum waiting time. d is the maximum waiting time. e is the minimum time of intercommunication signal. f is the necessary minimum time after disconnection. x is the response signal. y is the blank time. z is the intercommunication signal.

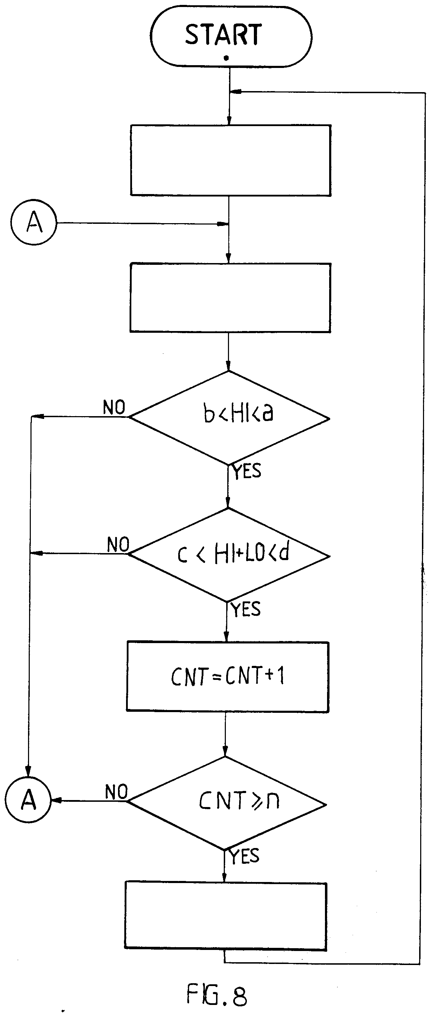

Please refer to Fig. 8 which is a flow chart of the control of the microcontroller 43 with respect to digital mobile phone signal. After powered on, the microcontroller sets variable TIMEMAX to 1 second. The variable TIMEMAX is the maximum scanning recovery time. The microcontroller also sets variable CNT to 0. The variable CNT is the scanning counting variable. The microcontroller first reads the width of the high level and low level signals as shown in Fig. 6 and then judges whether the width of the high level is between a and b. If not, the flow goes back to point A and judges whether the width of the low level is between c and d. If not, the flow goes back to point A. Then CNT is equal to CNT plus 1 and it is judged whether CNT reaches the scanning number N. If so, the output is activated.

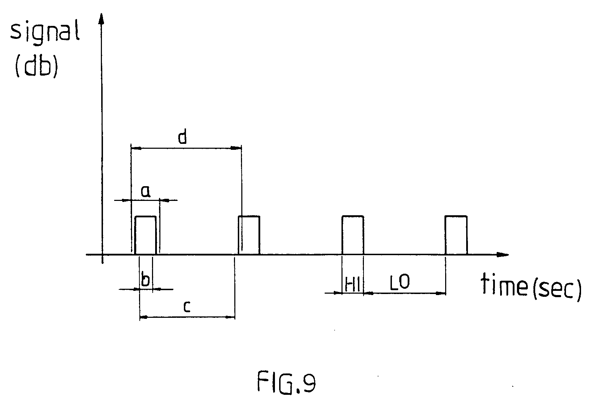

Referring to Fig. 9, HI is the width time of the high level signal, LO is the width time of the low level signal, a is the maximum width time of the high level signal, b is the minimum width time of the high level signal, c is the minimum width time of the low level signal, and d is the maximum width time of the low level signal.

According to the above arrangements, the control circuit of the present invention can be used to judge whether the mobile phone is in use and applied to the automatic sensing circuit of the amplifier of the hold-free hand set and the call-in current sensing circuit of wireless communicator. The present invention improves the conventional shortcomings of poor sensing and unapplicability to digital time division multiplex wireless communicator.

The above embodiment is only an example of the present invention and the scope of the present invention should not be limited to the example. Any modification or variation derived from the example should fall within the scope of the present invention.

## Claims

1. A mobile phone peripheral equipment control circuit for identifying electric wave time, said control circuit comprising a wave detector, a signal amplifier, a high-low level time identifier, a peripheral equipment on/off controller and a peripheral equipment, said high-low level time identifier including a microcontroller capable of identifying the transmission time of the electric wave of the mobile phone and accurately controlling on/off of the peripheral equipment.

2. A mobile phone peripheral equipment control circuit for identifying electric wave time as claimed in claim 1, wherein said wave detector consists of two wave detecting diodes and an antenna which cooperate with inductors, capacitors and resistors to enhance the wave detecting effect.

3. A mobile phone peripheral equipment control circuit for identifying electric wave time as claimed in claim 1, wherein said signal amplifier includes a simple calculation amplifier or a transistor for amplifying current and voltage, several degrees of amplifiers being connected in series for increasing the power.

4. A mobile phone peripheral equipment control circuit for identifying electric wave time as claimed in claim 1, wherein said identifier is a digital analog circuit including a microcontroller and a program for analyzing the wave time.

5. A mobile phone peripheral equipment control circuit for identifying electric wave time as claimed in claim 1, wherein said controller is a switch controllably openable by the voltage, such as a transistor or a relay.

6. A mobile phone peripheral equipment control circuit for identifying electric wave time as claimed in claim 1, wherein the peripheral equipment is the call-in informer, hold-free hand set, car sound controller, etc. and the call-in informer informs the user of the call-in via sound, light or vibration. amplifier, the input signal 412 being coupled by a capacitor 4210 into a signal 4211, an amplifier 421 consisting of a resistor 4214, resistor 4212 and transistor 4215 amplifying the signal 4211, the output signal 4215 being coupled by a secondary amplifier 412 to output a signal 424; and
a high-low level time identifier 43 employing a microcontroller to identify the wave form via a program and output a signal 431 for controlling a peripheral equipment on/off controller 44 which drives the peripheral equipment 45 according to the signal of the microcontroller 43.
